# EUROPÄISCHE PATENTANMELDUNG

(11) **EP 3 404 405 A1**
(43) Veröffentlichungstag der Anmeldung: **21.11.2018**
(21) Anmeldenummer: 17171650.9
(22) Anmeldetag: 18.05.2017
(51) Int. Cl.: G01N 27/14, C04B 35/00, G01N 27/16, G01N 15/06

(54) **SENSOR ZUR BESTIMMUNG VON GASPARAMETERN**

(71) Anmelder: Heraeus Sensor Technology GmbH, 63801 Kleinostheim (DE)
(72) Erfinder: Muziol, Matthias, 63533 Mainhausen (DE); Asmus, Tim, 35469 Allendorf-Winnen (DE); Dietmann, Stefan, 63755 Alzenau (DE)
(74) Vertreter: Heraeus IP

(57) **Zusammenfassung**

Die Erfindung betrifft einen Sensor, insbesondere Hochtemperatursensor, aufweisend zumindest einen vollkeramischen Heizer (3, 3'); und zumindest eine erste Sensorstruktur (9) angeordnet zumindest bereichsweise auf einer ersten Seite des vollkeramischen Heizers (3, 3'). Auch betrifft die vorliegende Erfindung ein Verfahren (1000) zum Herstellen eines Sensors.

## Beschreibung

Die vorliegende Erfindung betrifft einen Sensor zur Bestimmung von Gasparametern. Auch betrifft die vorliegende Erfindung ein Verfahren zum Herstellen eines Sensors.

Aus dem Stand der Technik sind verschiedenste Sensoren zur Analyse von Gasen bekannt. Derartige Sensoren werden oft eingesetzt im Abgasstrang von Verbrennungskraftmaschinen, beispielsweise als Temperatursensoren, Rußsensoren, Flowsensoren und als Multisensoren, die eine Kombination unterschiedlicher Sensortypen umfassen können. Die Verbrennungsgase oder Abgase derartiger Verbrennungskraftmaschinen können, abhängig von der Position des Sensors im Abgasstrang relativ zu dem Motor, eine sehr hohe Temperatur haben. Daher können bei der Abkühlung des Sensors häufig entsprechend sehr hohe Temperaturgradienten auftreten, die die Funktionsweise des Sensors nachteilig beeinflussen können. Auch müssen diese Sensoren, je nach Verwendung, zur Sicherstellung der Funktionsfähigkeit, dauerhaft oder zu gewissen Zeitabständen aktiv auf ein bestimmtes Temperaturniveau zur pyrolytischen Reinigung gebracht werden. Daher sollten die Sensoren eine hohe Temperaturschockbeständigkeit haben, d.h. eine hohe Widerstandsfähigkeit gegenüber starken Temperaturänderungen. Beispielsweise können derartige Temperarturänderungen durch Beaufschlagung mit Kondensattropfen entstehen.

Ein Beispiel für einen Sensor, der im Abgasstrang einer Verbrennungskraftmaschine verwendet werden kann, wird in der WO 2007/048573 A1 beschrieben. Der Sensor umfasst ein Strömungssensorelement mit einem Temperaturmesselement und einem Heizelement. Diese Elemente sind auf einem Trägerelement angeordnet, wobei das Temperaturmesselement einen Platindünnfilmwiderstand auf einem keramischen Untergrund zur Temperaturmessung aufweist und mit einem zusätzlichen Platindünnfilmwiderstand geheizt wird.

Ein Beispiel für einen Rußsensor mit Heizelement wird in der WO 2006/111386 A1 gezeigt. Der beschriebene Rußsensor weist eine Sensorstruktur auf einem Substrat zur Bestimmung einer Rußbelegung auf. Zum Freibrennen von Ruß ist ein Heizleiter auf dem Substrat als Dünnschichtstruktur aus Platin angeordnet.

Allerdings haben die aus dem Stand der Technik bekannten Sensoren den Nachteil, dass die Sensorstrukturen und Heizelemente eine große Fläche auf dem Substrat einnehmen. Auch sind die Herstellkosten der aus dem Stand der Technik bekannten Sensoren wegen dem hohen Edelmetallanteil in niederohmigen Heizelementen entsprechend hoch. Ein weiterer Nachteil, der aus dem Stand der Technik bekannten Heizelemente ist die geringe Temperaturschockbeständigkeit. Diese geringe Widerstandsfähigkeit gegenüber schnellen Temperaturänderungen äußert sich oftmals in Rissen und/oder sonstigen Veränderungen in dem Material des Substrats.

Aufgabe der vorliegenden Erfindung ist es daher, einen verbesserten Sensor bereitzustellen, der die Nachteile des Stands der Technik überwindet. Insbesondere einen hochtemperaturfesten Sensor bereitzustellen, der günstig in der Herstellung ist.

Diese Aufgabe wird erfindungsgemäß durch einen Sensor gemäß des Gegenstands des Patentanspruchs 1 gelöst.

Der erfindungsgemäße Sensor, insbesondere Hochtemperatursensor, weist hierfür auf: zumindest einen vollkeramischen Heizer; und
zumindest eine erste Sensorstruktur angeordnet zumindest bereichsweise auf einer ersten Seite des vollkeramischen Heizers.

Unter dem Begriff "vollkeramischer Heizer" kann ein Heizer verstanden werden, der einen Heizleiter aus einer elektrisch leitfähigen Keramik und eine Hülle aus einer elektrisch isolierenden Keramik umfasst. Die elektrisch leitfähige Keramik und die elektrisch isolierende Keramik können zu einem homogenen Körper versintert sein.

Vorzugsweise werden die Bereiche der elektrisch leitfähigen Keramik und der elektrisch isolierenden Keramik als Grünkörper zusammengefügt und der vollkeramische Heizer wird durch Co-Sinterung, in einem gemeinsamen Sinterschritt fertiggestellt. Deshalb kann in Beispielen der Erfindung der vollkeramische Heizer auch als "co-gesinterter vollkeramischer Heizer" bezeichnet werden.

Als "Sensorstruktur" kann im Sinne der vorliegenden Erfindung jede Struktur verstanden werden, die angepasst ist zumindest einen Gasparameter eines vorbeiströmenden Gases zu erfassen.

Der Erfindung liegt die überraschende Erkenntnis zu Grunde, dass ein Sensor mit einem reduzierten Edelmetallanteil hergestellt werden kann, da der vollkeramische Heizer im Wesentlichen ohne Edelmetallkomponenten aufgebaut ist. Lediglich zur Kontaktierung der Keramik können Elektroden, beispielsweise elektrische Zuführungen, die Edelmetallbestandteile umfassen können, verwendet werden. In Beispielen der Erfindung können die Elektroden, weiter vorteilhaft auch durch eine elektrisch leitende Keramik gebildet sein, die im Wesentlichen keine Edelmetallbestandteile umfasst.

Mit der Erfindung ist es erstmalig gelungen einen Sensor für Hochtemperaturanwendungen zu schaffen, der hohe Temperaturen über 1000°C, sowie schnelle Temperaturwechsel aushält, ohne dass es dabei zu einer Zerstörung oder zu einem Drift, d.h. zu einer Änderungen eines Ausgangssignals des Sensors, ohne dass es zu einer Änderungen der zu messenden Größe, kommt.

Weiter vorteilhaft bietet der Sensor, im Vergleich zu den aus dem Stand der Technik bekannten Sensoren, die eine ähnliche Größe haben, mehr Platz für die Sensorstruktur(en), da bei dem erfindungsgemäßen Sensor eine Heizung auf einer Oberfläche eines Trägerelements oder Substrats, die um oder in der Sensorstruktur angeordnet ist, nicht unbedingt notwendig ist.

Auch wird durch die guten Alterungs- und Verschleißbeständigkeiten der Keramiken eine lange Lebensdauer des Heizers gewährleistet. Mit einem derart aufgebauten voll keramischen Heizer können Temperaturen von bis zu 1000°C zuverlässig erfasst werden. Weitere Vorteile des vollkeramischen Heizers sind kurze Aufheizzeiten, eine geringe Nachwärme, eine verbesserte Regelbarkeit, eine gesteigerte Lebensdauer bei hohen Temperaturen, sowie eine hohe mechanische Festigkeit.

Ein weiterer Vorteil des Sensors auf einem voll keramischen Heizers ist die Möglichkeit der Anwendung in elektrisch leitfähigen Medien, wie z.B. Flüssigkeiten oder ionisierten Gasen. Aufgrund der elektrisch isolierenden Hülle des vollkeramischen Heizers besteht im Gegensatz zu freiliegenden Heizern keine Kurzschlussgefahr.

In einem Beispiel weist der vollkeramische Heizer zumindest eine elektrisch leitfähige Keramik auf, bevorzugt ist die elektrisch leitfähige Keramik an zumindest zwei voneinander getrennten Positionen mit Elektroden kontaktiert. Weiterhin weist der vollkeramische Heizer zumindest eine elektrisch isolierende Keramik auf, wobei die elektrisch isolierende Keramik die elektrisch leitfähige Keramik zumindest bereichsweise umgibt, bevorzugt vollständig umgibt.

Die elektrisch leitfähige Keramik kann auch als Heizleiter oder Heizwiderstand bezeichnet werden. Aufgabe der elektrisch leitfähigen Keramik ist es, elektrische Energie in thermische Energie umzuwandeln. Hierfür hat die elektrisch leitfähige Keramik vorzugsweise einen niedrigen spezifischen Widerstand, beispielsweise in einem Bereich von 5*10⁻³ Ω cm bis 5*10⁻¹ Ω cm, so dass sich die Keramik erhitzt, wenn sie von Strom durchflossen wird. Der Widerstand des Heizleiters kann durch die räumliche Anordnung der Elektroden an der Keramik festgelegt werden und wird durch die Widerstandsstrecke zwischen den Elektroden gebildet.

In diesem Zusammenhang kann der Begriff "Elektrode" dazu verwendet werden, um einen elektrischen Leiter oder einen Bereich, beispielsweise ein Anschlusspad, eines elektrischen Leiters zu bezeichnen, der mit der elektrisch leitfähigen Keramik elektrisch verbunden ist.

Erfindungsgemäß ist die elektrisch leitfähige Keramik zumindest bereichsweise von der elektrisch isolierenden Keramik umgeben. In einem Beispiel kann die elektrisch leitfähige Keramik in der elektrisch isolierenden Keramik gekapselt, oder sogar hermetisch gekapselt sein. Die Oberfläche des vollkeramischen Heizers kann somit durch die elektrisch isolierende Keramik gebildet werden und die erste Sensorstruktur auf der elektrisch isolierenden Keramik angeordnet werden.

Die Elektroden können durch die elektrisch isolierende Keramik hindurchgeführt werden, so dass der vollkeramische Heizer elektrisch kontaktiert werden kann, beispielsweise kann der vollkeramische Heizer mittels der Elektroden an eine Energieversorgungsquelle angeschlossen werden. Die Elektroden können beispielsweise Metalldrähte sein.

Der vollkeramische Heizer kann beispielsweise durch Pressen zumindest eines KeramikPulvers in eine gewünschte Form als sogenannter "Grünkörper" geformt werden. Abhängig vom gewünschten Verwendungszweck können aber auch noch weitere Formgebungsverfahren, wie Foliengießen, Extrudieren, Spritzgießen und Druckschlickerguß, usw. zur Herstellung des Grünkörpers verwendet werden. Nach dem Herstellen des Grünkörpers kann der Grünkörper unter Stickstoffatmosphäre gesintert werden. Ein mögliches Herstellungsverfahren wird beispielsweise in der EP 0 384 342 A1 beschrieben.

Weiterhin kann die elektrisch isolierende oder elektrisch leitende Keramik eine Mischung aus zwei Pulvern und mehr umfassen, um somit beispielsweise die mechanischen Eigenschaften der Keramiken besser festlegen zu können.

Vorteilhaft können, je nach beabsichtigtem Einsatzgebiet des entstehenden Sensors, die Mengenverhältnisse der Pulver relativ zueinander verändert werden, so dass die Keramiken, abhängig von den Pulvermengen, unterschiedliche elektrische und/oder thermische Eigenschaften haben können.

Auch können die Pulver homogen gemischt sein, so dass die Materialeigenschaften der Keramiken über die gesamte Ausdehnung der Keramiken im Wesentlichen gleich sind. Alternativ können die Keramiken in bestimmten Bereichen auch ungleichmäßig gemischtes Pulver aufweisen, um hierdurch, je nach beabsichtigtem Einsatzgebiet des entstehenden Sensors, in diesen Bereichen bessere/schlechtere elektrische und/oder thermische Leitfähigkeiten aufzuweisen.

In einem Beispiel ist die elektrisch leitfähige Keramik aus Keramik-Pulvern gebildet, umfassend Silicid-, Carbonat- und/oder Nitrid-Pulver, und zumindest ein Element aus der Gruppe Wolfram, Tantal, Niob, Titan, Molybdän, Zirkon, Hafnium, Vanadium und/oder Chrom, und die elektrisch isolierende Keramik ist aus wärmeleitfähigen Keramik-Pulvern gebildet, umfassend Siliciumnitrid und/oder Aluminiumnitrid.

Vorteilhaft bewirken die Elemente der Keramik-Pulver der elektrisch leitfähigen Keramik, dass die elektrisch leitfähige Keramik einen geringen spezifischen Widerstand hat. Weiter vorteilhaft bewirken die Elemente der Keramik-Pulver, der elektrisch isolierenden Keramik, dass die elektrisch isolierende Keramik einen hohen Festigkeitswert, sowie eine hohe Oxidationsbeständigkeit hat.

In einem weiteren Beispiel weist der vollkeramische Heizer eine Dicke zwischen 0,3 mm und 3 mm auf, bevorzugt weist der vollkeramische Heizer eine Dicke zwischen 0,5 mm und 1,5 mm auf.

Vorteilhaft können extrem dünne vollkeramische Heizer realisiert werden, auf denen die erste Sensorstruktur angeordnet werden kann, und die bereits eine ausreichende Heizleistung zur Beheizung der ersten Sensorstruktur zur Verfügung stellen können.

In noch einem Beispiel weist der Sensor auf:
zumindest eine erste Isolierschicht angeordnet zumindest bereichsweise auf der ersten Seite des vollkeramischen Heizers und/oder
zumindest eine zweite Isolierschicht angeordnet zumindest bereichsweise auf einer zweiten Seite des vollkeramischen Heizers, die der ersten Seite gegenüberliegt.

Die erste und/oder zweite Isolierschicht kann/können, abhängig von dem verwendeten vollkeramischen Heizer, entweder auf der elektrisch leitfähigen Keramik, oder bereits auf der elektrisch isolierenden Keramik angeordnet sein und als elektrischer Isolator zwischen der elektrisch leitfähigen Keramik und der/den Sensorstruktur/en dienen. Weiter vorteilhaft kann/können die erste und/oder zweite Isolierschicht auch als Haftvermittler für die Sensorstruktur/en dienen.

In noch einem Beispiel umfasst die erste Isolierschicht und/oder die zweite Isolierschicht eine elektrisch isolierende Keramik.

Die elektrisch isolierende Keramik kann gute Wärmeleiteigenschaften haben, damit die erzeugte Wärme durch die elektrisch isolierende Keramik hindurch geleitet werden kann. In einem Beispiel kann die zweite Isolierschicht das gleiche Material umfassen, wie bereits die erste Isolierschicht. Allerdings kann die zweite Isolierschicht auch eine elektrisch isolierende Keramik mit anderen Isolations- und/oder Wärmeleiteigenschaften, im Vergleich zu denen der ersten Isolierschicht aufweisen.

In einem Beispiel umfassen/umfasst die erste Sensorstruktur und/oder eine zweite Sensorstruktur, die angeordnet ist auf der ersten Seite oder auf einer zweiten Seite des vollkeramischen Heizers, zumindest eine Widerstandsstruktur zur Temperaturmessung, insbesondere einen mäanderförmigen Messwiderstand.

Der Messwiderstand kann aus einer Leiterbahn mit einem geschwungenen Verlauf zwischen den beiden Elektroden gebildet werden. Beispielsweise kann die Leiterbahn mäanderförmig ausgestaltet sein. Ein derartiger Messwiderstand kann lediglich an einer Seite, entweder auf der ersten oder der zweiten Seite des vollkeramischen Heizers angeordnet sein. In einem weiteren Beispiel kann auch auf beiden Seiten des vollkeramischen Heizers ein Messwiderstand angeordnet sein.

Vorteilhaft kann/können die Sensorstruktur/en sich über die gesamte Oberfläche des vollkeramischen Heizers erstrecken, da kein separates Heizelement auf der Oberfläche des vollkeramischen Heizers angeordnet werden muss.

In einem weiteren Beispiel umfasst/umfassen die erste Sensorstruktur und/oder die zweite Sensorstruktur, die angeordnet ist/sind auf der ersten Seite oder auf der zweiten Seite des vollkeramischen Heizers, zumindest eine Kammstruktur, IDK Struktur, zur Messung einer Konzentration einer Ablagerung von Rußpartikeln.

Üblicherweise können IDK Strukturen zur Bestimmung von Rußpartikeln in einem Rußsensor eingesetzt werden.

In einem Beispiel umfassen/umfasst die erste Sensorstruktur und/oder die zweite Sensorstruktur, die angeordnet ist auf der ersten Seite oder auf der zweiten Seite des vollkeramischen Heizers, zumindest ein elektrisches Heizelement und zumindest einen Temperatursensor für eine anemometrische Messung.

Derartige Sensorstrukturen können in Durchflusssensoren, die auch als Flowsensoren bezeichnet werden können, eingesetzt werden, um einen Durchsatz in einem Kanal, beispielsweise in einem Abgasstrang, zu messen.

Auch können auf beiden Seiten des vollkeramischen Heizers unterschiedliche Sensorstrukturen, zur Bestimmung unterschiedlicher Größen, angeordnet sein. Ein derartiger Sensor kann als Multisensor bezeichnet werden.

In noch einem Beispiel umfassen/umfasst die erste Sensorstruktur und/oder die zweite Sensorstruktur zumindest ein Platinmaterial.

Vorteilhaft kann/können die Sensorstruktur/en ein Platinwiderstand als Messwiderstand aufweisen.

In einem weiteren Beispiel weist der Sensor auf:
zumindest eine erste keramische Zwischenschicht, angeordnet zumindest bereichsweise auf der ersten Sensorstruktur; und/oder zumindest eine zweite keramische Zwischenschicht, angeordnet zumindest bereichsweise auf der zweiten Sensorstruktur, wobei die erste und/oder zweite keramische Zwischenschicht vorzugsweise Aluminiumoxid und/oder Magnesiumoxid umfasst.

Vorteilhaft können solche keramischen Zwischenschichten als Diffusionsbarrieren eingesetzt werden, wie es beispielsweise in der DE10 2007 046 900 B4 beschrieben wird.

In noch einem Beispiel weist der Sensor auf:
zumindest eine erste Abdeckschicht angeordnet zumindest bereichsweise auf der ersten keramischen Zwischenschicht; und/oder
zumindest eine zweite Abdeckschicht angeordnet zumindest bereichsweise auf der zweiten keramischen Zwischenschicht.

Eine solche Abdeckschicht kann als Passivierungsschicht, die beispielsweise Quarzglas und optional eine Keramik enthalten kann, auf der/den keramischen Zwischensicht/en angeordnet sein, wie es beispielsweise auch in der DE10 2007 046 900 B4 beschrieben wird.

Die Erfindung schlägt auch eine Verwendung eines Sensors nach einem der vorangehenden Ansprüche vor, insbesondere im Abgasstrang eines Kraftfahrzeugs, als Temperatursensor, Rußsensor, Flowsensor, und/oder als Multisensor, der eine Kombination aus Temperatursensor, Rußsensor, und/oder Flowsensor umfasst.

Weiterhin schlägt die Erfindung ein Verfahren zur Herstellung eines Sensors vor, insbesondere eines Hochtemperatursensors, aufweisend die Schritte:
Bereitstellen zumindest eines vollkeramischen Heizers; und
Aufbringen zumindest einer ersten Sensorstruktur zumindest bereichsweise auf eine erste Seite des vollkeramischen Heizers.

Vorteilhaft kann ein keramischer Heizer, wie er beispielsweise in der EP 0 763 693 B1 beschrieben ist, als Substrat verwendet verwenden und die Sensorstruktur/en können auf dem keramischen Heizer angeordnet werden. Vorteilhaft kann hierdurch der Sensor einfach und kostengünstig hergestellt werden.

In einem Beispiel ist das Verfahren dadurch gekennzeichnet, dass das Bereitstellen aufweist:
Herstellen des vollkeramischen Heizers mittels Co-Sinterung einer elektrisch leitfähigen und einer elektrisch isolierenden Keramik; und/oder
wobei das Aufbringen aufweist:
   Bedrucken der ersten Isolierschicht, insbesondere in Dünnschichttechnik, mit einem Platinmaterial.

Beispielsweise kann die Platinschicht auf das Substrat aber auch in Dickschichttechnologie aufgebracht werden. Hierfür kann Platinpulver mit Oxiden und Bindemitteln gemischt werden und durch Siebdruck auf das Substrat aufgebracht werden. Anschließend kann ein Tempern stattfinden.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Explosionsdarstellung eines Sensors gemäß einer Ausführungsform der Erfindung;
- Figur 2: eine schematische Schichtdarstellung eines vollkeramischen Heizers gemäß einer Ausführungsform der Erfindung;
- Figur 3a, 3b: schematische Darstellungen eines vollkeramischen Heizers gemäß einer Ausführungsform der Erfindung als Explosionsdarstellung und eine Darstellung des vollkeramischen Heizers im zusammengefügten Zustand; und
- Figur 4: ein Verfahren zur Herstellung eines Sensors gemäß einer Ausführungsform der Erfindung.

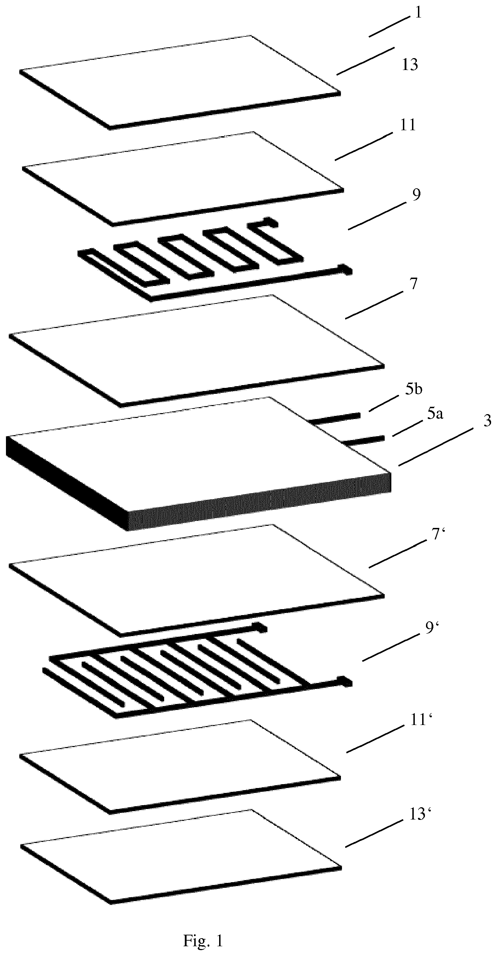

In Figur 1 wird eine schematische Explosionsdarstellung eines Sensors 1 gemäß einer Ausführungsform der Erfindung gezeigt. Der beispielhaft gezeigte Sensor 1 weist einen vollkeramischen Heizer 3 auf, der einen Heizleiter aus einer elektrisch leitfähigen Keramik und eine Hülle aus einer elektrisch isolierenden Keramik umfasst. In der gezeigten Ausführungsform sind die elektrisch leitfähige Keramik und die elektrisch isolierende Keramik zu einem homogenen Körper versintert.

Weiterhin zeigt Figur 1 zwei Elektroden 5a, 5b, die an dem vollkeramischen Heizer 3 angeordnet sind. In der gezeigten Ausführungsform sind die Elektroden 5a, 5b als elektrische Zuführungen ausgestaltet. Die Elektroden 5a, 5b kontaktieren die elektrisch leitfähige Keramik an zwei unterschiedlichen Positionen, so dass der Bereich der elektrisch leitfähigen Keramik zwischen den Elektroden 5a, 5b als Heizleiter oder Heizwiderstand ausgebildet ist. An die Elektroden 5a, 5b kann eine Energiequelle, wie beispielsweise eine Stromquelle, (nicht gezeigt in Figur 1) angeschlossen werden, so dass sich die Keramik erhitzt, wenn sie von einem Strom durchflossen wird. Der Widerstand des Heizleiters kann durch die Anordnung der Elektroden 5a, 5b an der Keramik bestimmt werden und wird durch die Widerstandsstrecke zwischen den Elektroden 5a, 5b gebildet. Die Elektroden 5a, 5b sind in der in Figur 1 gezeigten Ausführungsform nebeneinander an einer Seite des vollkeramischen Heizers 3 angeordnet. Der Fachmann weiß aber, dass die Elektroden 5a, 5b in nicht gezeigten Ausführungsformen auch an anderen Position des vollkeramischen Heizers 3, beispielsweise an gegenüberliegenden Seiten des vollkeramischen Heizers 3 angeordnet sein können. Weiterhin können in einer nicht gezeigten Ausführungsform auch mehr als zwei Elektroden an dem vollkeramischen Heizer 3 angeordnet sein. Beispielsweise können vier Elektroden an dem vollkeramischen Heizer 3 angeordnet sein und können die elektrisch leitfähige Keramik elektrisch kontaktieren, um zwei Stromkreise schließen zu können, die unabhängig voneinander sind. In der nicht gezeigten Ausführungsform können hierdurch zwei unabhängig schaltbare Heizwiderstände mit unterschiedlichen Heizleistungen in einem vollkeramischen Heizer ausgebildet sein.

Optional ist in der in Figur 1 gezeigten Ausführungsform eine erste Isolierschicht 7 gezeigt, die auf der ersten Seite des vollkeramischen Heizers 3 angeordnet ist. Beispielsweise kann die erste Isolierschicht 7 durch Siebdruck einer elektrisch isolierenden Keramikpaste hergestellt werden. Alternativ hierzu kann die erste Isolierschicht 7 auch durch Beschichtung mit Metalloxiden mit Verfahren wie Sputtern, thermisches Aufdampfen oder Aerosol Deposition hergestellt werden. Die erste Isolierschicht 7 kann vollflächig eine Oberfläche des vollkeramischen Heizers 3 bedecken, oder nur auf einem Teilbereich der Oberfläche des vollkeramischen Heizers 3 angeordnet sein. Auch können in einer nicht gezeigten Ausführungsform Aussparungen in dem Material der ersten Isolierschicht eingebracht sein, um eine Kontaktierung der Elektroden durch die erste Isolierschicht zu ermöglichen.

Auf dem vollkeramischen Heizer 3 oder auf der optional aufgebrachten ersten Isolierschicht 7 ist eine erste Sensorstruktur 9 angeordnet, die beispielsweise als eine Platinwiderstandsstruktur ausgeführt sein kann. Die gezeigte erste Sensorstruktur 9 zeigt eine mäanderförmige Widerstandsstruktur, wie sie beispielsweise für Temperaturmessungen verwendet werden kann. Die mäanderförmige Widerstandsstruktur kann, wie es in Figur 1 gezeigt wird, über zwei Anschlusskontakte verfügen, um die Widerstandsstruktur an eine Auswerteelektronik anschließen zu können (nicht gezeigt in Figur 1). Alternativ oder zusätzlich zu der gezeigten Widerstandsstruktur können, in nicht gezeigten Ausführungsformen, weitere Sensorstrukturen und/oder Heizelemente auf der ersten Oberfläche des vollkeramischen Heizers 3 angeordnet sein.

Beispielsweise kann eine IDK Struktur anstatt oder neben der mäanderförmigen Widerstandsstruktur, zur Bestimmung von Rußpartikeln, angeordnet sein.

Weiterhin wird in der Figur 1 lediglich optional gezeigt, dass die erste Sensorstruktur 9 und Bereiche des vollkeramischen Heizelements 3, die die nicht von der ersten Sensorstruktur 9 bedeckt sind, von einer keramischen Zwischensicht 11 zumindest teilweise bedeckt sein können. Die keramische Zwischenschicht 11 kann wiederum, lediglich optional, von einer Abdeckschicht 13 zumindest teilweise bedeckt sein. Der Fachmann weiß aber, dass eine Zwischenschicht 11 und/oder eine Abdeckschicht 13 nicht notwendig sind für die Verwendung des in Figur 1 gezeigten Sensors 1 als Temperatursensor, Rußsensor, Flowsensor, und/oder als Multisensor im Abgasstrang eines Kraftfahrzeugs.

In der in Figur 1 gezeigten Ausführungsform ist auf der zweiten Seiten des vollkeramischen Heizelements 3 eine zweite Isolierschicht 7' angeordnet, die ein gleiches Material wie die erste Isolierschicht 7 umfassen kann.

In der gezeigten Ausführungsform ist beispielhaft eine IDK Struktur zur Bestimmung von Rußpartikeln als zweite Sensorstruktur 9' auf dem vollkeramischen Heizer 3 angebracht. In alternativen, nicht hierin gezeigten, Ausführungsformen kann die zweite Sensorstruktur 9' auch weitere/alternative Strukturen umfassen, die angepasst sind einen oder mehrere Gasparameter eines vorbeiströmenden Gases zu erfassen.

Auch kann, wie es bereits hierin bezüglich der ersten Seite des vollkeramischen Heizers 3 beschrieben wurde, auf der zweiten Sensorstruktur 9' zumindest bereichsweise eine keramische Zwischenschicht 11' angeordnet sein, auf der wiederum zumindest bereichsweise eine Abdeckschicht 13' angeordnet sein kann.

Eine Anordnung von Strukturen auf der zweiten Seite des Substrats 3 ist aber nicht essentiell für die Erfindung. Ein erfindungsgemäßer Sensor 1 kann auch lediglich einen vollkeramischen Heizer 3, eine erste Isolierschicht 7 und eine erste Sensorstruktur 9 umfassen.

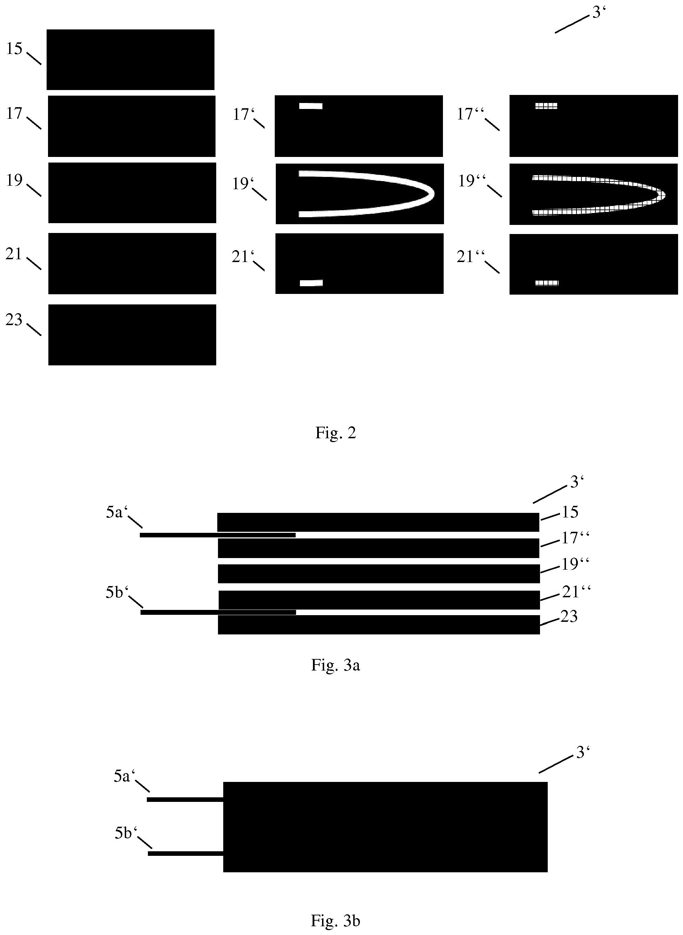

In Figur 2 ist eine schematische Schichtdarstellung eines vollkeramischen Heizers 3' gemäß einer Ausführungsform der Erfindung gezeigt. Die in Figur 2 gezeigte Schichtdarstellung kann eine Darstellung des Aufbaus des bereits in Figur 1 gezeigten vollkeramischen Heizers 3 sein. In der linken Spalte von Figur 2 werden mehrere im Wesentlichen gleiche Schichten 15 - 23 eines gepressten, elektrisch isolierenden Keramikpulvers als sogenannter "Grünkörper" gezeigt. Die Schichten 15 - 23 können, wie es in Figur 2 gezeigt wird, im Wesentlichen rechteckig ausgestaltet sein. In nicht gezeigten Ausführungsformen können die Schichten aber auch eine andere Geometrie aufweisen, beispielsweise können die Schichten rund oder oval sein.

In der mittleren Spalte von Figur 2 werden drei Schichten 17' - 21' gezeigt, die die in der linken Spalte gezeigten Schichten 17 - 21 sein können, mit Ausnehmungen, die beispielsweise durch Ausstanzen eingebracht werden können. In den Schichten 17' und 21' sind Geometrien für eine Kontaktierung des Heizleiters mit den Elektroden ausgeformt. In der Schicht 19' ist eine Geometrie für den Heizleiter ausgeformt. Die gezeigten Geometrien sind nur beispielhaft, abhängig vom gewünschten Verwendungszweck können die Geometrien auch anders als gezeigt ausgestaltet sein, beispielsweise kann der Heizleiter auch stabförmig oder mäanderförmig ausgestaltet sein.

In der rechten Spalte von Figur 3 werden drei Schichten 17" - 21" gezeigt, die die in der mittleren Spalte gezeigten Schichten 17' - 21' sein können, mit einem in die Ausnehmungen eingebrachten elektrisch leitfähigen Keramikpulver.

In den Figuren 3a und 3b werden schematische Darstellungen eines vollkeramischen Heizers 3' gemäß einer Ausführungsform der Erfindung als eine Explosionsdarstellung und eine Darstellung im zusammengefügten Zustand gezeigt.

In Figur 3a werden, die in Figur 2 gezeigten Schichten 15, 17", 19", 21" und 23 auf einem Stapel angeordnet gezeigt. An den in Figur 2 gezeigten Kontakten, zur Kontaktierung des Heizleiters, sind in der in Figur 3a gezeigten Ausführungsform Elektroden 5a', 5b' in Form von Kontaktstiften oder Anschlussdrähten angeordnet.

In Figur 3b wird der in Figur 3a gezeigte Stapel im zusammengefügten Zustand gezeigt. Beispielsweise können die Schichten mittels Sintern miteinander verbunden werden. Beispielsweise kann eine Sinterung bei einer Temperatur von 1600 - 2000 °C unter Stickstoffatmosphäre stattfinden.

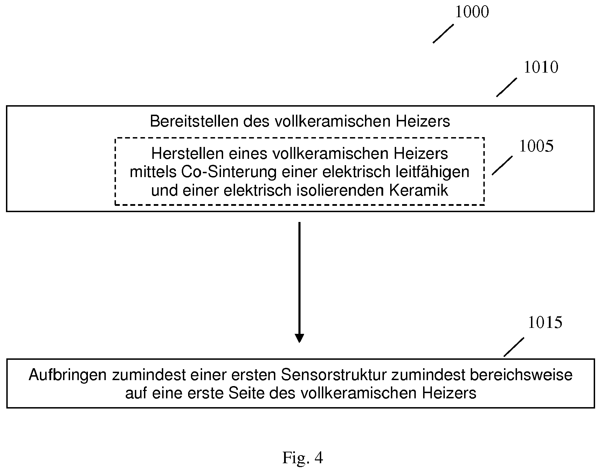

Figur 4 zeigt ein Verfahren 1000 zur Herstellung eines Sensors 1 gemäß einer Ausführungsform der Erfindung. Das Verfahren 1000 weist die nachfolgenden Schritte auf:
Bereitstellen 1010 zumindest eines vollkeramischen Heizers 3; und
Aufbringen 1015 zumindest einer ersten Sensorstruktur 9 zumindest bereichsweise auf eine erste Seite des vollkeramischen Heizers 3.

Weiterhin kann das Bereitstellen 1010 auch ein Herstellen 1005 des vollkeramischen Heizers 3, 3' mittels Co-Sinterung einer elektrisch leitfähigen und einer elektrisch isolierenden Keramik umfassen. In der Figur 4 ist die Umrandung dieses Schritts gestrichelt gezeigt, da das Herstellen 1005 des vollkeramischen Heizers lediglich optional ist.

Die in der vorstehenden Beschreibung, in den Ansprüchen und in den Figuren dargestellten Merkmale können sowohl einzeln als auch in beliebiger Kombination wesentlich für die Erfindung in ihren verschiedenen Ausführungsformen sein.

### Bezugszeichenliste

- 1: Sensor
- 3, 3': vollkeramischer Heizer
- 5a, 5a', 5b, 5b': Elektrode
- 7, 7`: Isolierschicht
- 9, 9`: Sensorstruktur
- 11, 11': keramische Zwischenschicht
- 13, 13': Abdeckschicht
- 15: erste Schicht
- 17, 17', 17": zweite Schicht
- 19, 19', 19": dritte Schicht
- 21, 21 21": vierte Schicht
- 23: fünfte Schicht

- 1000: Verfahren zur Herstellung eines Sensors
- 1005: Herstellen
- 1010: Bereitstellen
- 1015: Aufbringen

## Patentansprüche

1. Sensor, insbesondere Hochtemperatursensor, aufweisend:
zumindest einen vollkeramischen Heizer (3, 3'); und
zumindest eine erste Sensorstruktur (9) angeordnet zumindest bereichsweise auf einer ersten Seite des vollkeramischen Heizers (3, 3').

2. Sensor nach Anspruch 1, **dadurch gekennzeichnet, dass** der vollkeramische Heizer (3, 3') aufweist:
zumindest eine elektrisch leitfähige Keramik, bevorzugt ist die elektrisch leitfähige Keramik an zumindest zwei voneinander getrennten Positionen mit Elektroden (5a, 5a', 5b, 5b') kontaktiert, und
zumindest eine elektrisch isolierende Keramik, wobei die elektrisch isolierende Keramik die elektrisch leitfähige Keramik zumindest bereichsweise umgibt, bevorzugt vollständig umgibt.

3. Sensor nach Anspruch 2, **dadurch gekennzeichnet, dass** die elektrisch leitfähige Keramik aus Keramik-Pulvern gebildet ist, umfassend Silicid-, Carbonat- und/oder Nitrid-Pulver, und zumindest ein Element aus der Gruppe Wolfram, Tantal, Niob, Titan, Molybdän, Zirkon, Hafnium, Vanadium und/oder Chrom, und dass die elektrisch isolierende Keramik aus wärmeleitfähigen Keramik-Pulvern gebildet ist, umfassend Siliciumnitrid und/oder Aluminiumnitrid.

4. Sensor nach einem der vorangehenden Ansprüche, **dadurch gekennzeichnet, dass** der vollkeramische Heizer (3, 3') eine Dicke zwischen 0,3 mm und 3 mm aufweist, bevorzugt eine Dicke zwischen 0,5 mm und 1,5 mm aufweist.

5. Sensor nach einem der vorangehenden Ansprüche, **dadurch gekennzeichnet, dass** der Sensor aufweist:
zumindest eine erste Isolierschicht (7) angeordnet zumindest bereichsweise auf der ersten Seite des vollkeramischen Heizers (3, 3'), und/oder
zumindest eine zweite Isolierschicht (7') angeordnet zumindest bereichsweise auf einer zweiten Seite des vollkeramischen Heizers (3, 3'), die der ersten Seite gegenüberliegt.

6. Sensor nach Anspruch 5, **dadurch gekennzeichnet, dass** die erste Isolierschicht (7) und/oder die zweite Isolierschicht (7') eine elektrisch isolierende Keramik umfasst.

7. Sensor nach einem der vorangehenden Ansprüche, **dadurch gekennzeichnet, dass** die erste Sensorstruktur (9) und/oder eine zweite Sensorstruktur (9'), die angeordnet ist auf der ersten Seite oder auf der zweiten Seite des vollkeramischen Heizers (3, 3'), zumindest eine Widerstandsstruktur zur Temperaturmessung umfassen/umfasst, insbesondere einen mäanderförmigen Messwiderstand umfassen/umfasst.

8. Sensor nach einem der vorangehenden Ansprüche, **dadurch gekennzeichnet, dass** die erste Sensorstruktur (9) und/oder die zweite Sensorstruktur (9'), die angeordnet ist auf der
ersten Seite oder auf der zweiten Seite des vollkeramischen Heizers (3, 3'), zumindest eine Kammstruktur, IDK Struktur, zur Messung einer Konzentration einer Ablagerung von Rußpartikeln umfassen/umfasst.

9. Sensor nach einem der vorangehenden Ansprüche, **dadurch gekennzeichnet, dass** die erste Sensorstruktur (9) und/oder die zweite Sensorstruktur (9'), die angeordnet ist auf der ersten Seite oder auf der zweiten Seite des vollkeramischen Heizers (3, 3'), zumindest ein elektrisches Heizelement und zumindest einen Temperatursensor für eine anemometrische Messung umfassen/umfasst.

10. Sensor nach einem der vorangehenden Ansprüche, **dadurch gekennzeichnet, dass** die erste Sensorstruktur (9) und/oder die zweite Sensorstruktur (9') zumindest ein Platinmaterial umfassen/umfasst.

11. Sensor nach einem der vorangehenden Ansprüche, **dadurch gekennzeichnet, dass** der Sensor aufweist:
zumindest eine erste keramische Zwischenschicht (11), angeordnet zumindest bereichsweise auf der ersten Sensorstruktur (9); und/oder
zumindest eine zweite keramische Zwischenschicht (11'), angeordnet zumindest bereichsweise auf der zweiten Sensorstruktur (9'), wobei die erste (11) und/oder zweite (11') keramische Zwischenschicht vorzugsweise Aluminiumoxid und/oder Magnesiumoxid umfasst.

12. Sensor nach Anspruch 11, **dadurch gekennzeichnet, dass**
der Sensor aufweist:
zumindest eine erste Abdeckschicht (13) angeordnet zumindest bereichsweise auf der ersten keramischen Zwischenschicht (11); und/oder
zumindest eine zweite Abdeckschicht (13') angeordnet zumindest bereichsweise auf der zweiten keramischen Zwischenschicht (11').

13. Verwendung eines Sensors nach einem der vorangehenden Ansprüche, insbesondere im Abgasstrang eines Kraftfahrzeugs, als Temperatursensor, Rußsensor, Flowsensor, und/oder als Multisensor, der eine Kombination aus Temperatursensor, Rußsensor, und/oder Flowsensor umfasst.

14. Ein Verfahren zur Herstellung eines Sensor, insbesondere eines Hochtemperatursensors, aufweisend die Schritte:
Bereitstellen (1010) zumindest eines vollkeramischen Heizers (3, 3'); und
Aufbringen (1015) zumindest einer ersten Sensorstruktur (9) zumindest bereichsweise auf eine erste Seite des vollkeramischen Heizers (3, 3').

15. Verfahren nach Anspruch 14, **dadurch gekennzeichnet, dass** das Bereitstellen (1010) aufweist:
Herstellen (1005) des vollkeramischen Heizers (3, 3') mittels Co-Sinterung einer elektrisch leitfähigen und einer elektrisch isolierenden Keramik; und/oder
wobei das Aufbringen (1015) aufweist:
Bedrucken der ersten Isolierschicht (7), insbesondere in Dünnschichttechnik, mit einem Platinmaterial.
